# EUROPÄISCHE PATENTSCHRIFT

(11) **EP 3 755 190 B1**
(45) Veröffentlichungstag und Bekanntmachung des Hinweises auf die Patenterteilung: **01.09.2021**
(21) Anmeldenummer: 19713675.7
(22) Anmeldetag: 22.02.2019
(51) Int. Cl.: A47J 31/44

(54) **GETRÄNKEBEREITUNGSMASCHINE FÜR BRÜHGETRÄNKE MIT EINER ABDECKBLENDE ZUM ABDECKEN EINER IN EINER GEHÄUSEWAND AUSGEBILDETEN ÖFFNUNG.**
BEVERAGE PREPARATION MACHINE FOR BREWED BEVERAGES HAVING A COVER PLATE FOR COVERING AN OPENING FORMED IN A HOUSING WALL
MACHINE POUR PRÉPARER DES BOISSONS DE TYPE INFUSIONS MUNIE D'UN CACHE AFIN DE COUVRIR UNE OUVERTURE MÉNAGÉE DANS UNE PAROI DE CORPS

(30) Priorität: 23.02.2018 DE 202018101006 U
(43) Veröffentlichungstag der Anmeldung: 30.12.2020
(73) Patentinhaber: JURA Elektroapparate AG, 4626 Niederbuchsiten (CH)
(72) Erfinder: BÜTTIKER, Philipp, 4625 Oberbuchsiten (CH); RÜTTI, Pascal, 4623 Neuendorf (CH)
(74) Vertreter: EGLI-EUROPEAN PATENT ATTORNEYS
(86) Internationale Anmeldenummer: PCT/CH2019/000005
(87) Internationale Veröffentlichungsnummer: WO 2019/161513

(56) Entgegenhaltungen:
- EP-A1- 0 783 859
- EP-A1- 2 946 703
- DE-A1-102012 200 312

## Beschreibung

### Technisches Gebiet

Die Erfindung bezieht sich auf eine Getränkebereitungsmaschine für Brühgetränke.

### Stand der Technik

Bekannte Getränkebereitungsmaschinen der vorstehend genannten Art sind zum Bereiten von Brühgetränken wie beispielsweise Kaffee, Tee oder dergleichen bestimmt und umfassen üblicherweise ein Gehäuse mit einer Gehäusewand, welche einen Innenraum umschliesst und mindestens eine Öffnung aufweist, und eine im Innenraum angeordnete Brüheinrichtung zum Herstellen eines Brühgetränks (z.B. Kaffee, Tee, etc.) durch Aufbrühen einer von der Brüheinrichtung aufgenommenen Menge eines Feststoffmaterials (z.B. Kaffeepulver, Blätter und/oder Blattknospen von Teepflanzen, etc.) mit einer Brühflüssigkeit (z.B. Wasser), wobei die von der Brüheinrichtung aufgenommene Menge des Feststoffmaterials aus der Brüheinrichtung ausgebbar ist.

Um eine hygienische Entsorgung der zum Aufbrühen verwendeten Menge des jeweiligen Feststoffmaterials zu ermöglichen, sind derartige Getränkebereitungsmaschinen in Regel mit einem bewegbaren Behälter ausgestattet, welcher durch die in der Gehäusewand ausgebildete Öffnung in den Innenraum bringbar und zur Aufnahme einer aus der Brüheinrichtung ausgegebenen Menge des Feststoffmaterials geeignet ist. Um zu erreichen, dass dieser Behälter im Normalbetrieb einer Getränkebereitungsmaschine von der Aussenseite der Getränkebereitungsmaschine nicht sichtbar ist, ist in der Regel ausserdem eine bewegbare Abdeckblende zum Abdecken der Öffnung vorhanden, wobei die Abdeckblende zumindest in eine erste Stellung und in eine zweite Stellung bringbar und ausserdem derart ausgebildet ist, dass sie in der ersten Stellung zumindest einen Bereich der Öffnung abdeckt und/oder verschliesst und in der zweiten Stellung die Öffnung derart freigibt, dass der Behälter durch die Öffnung bewegbar ist.

Um den Behälter, welcher zur Aufnahme der jeweils zum Aufbrühen verwendeten Menge des Feststoffmaterials bestimmt ist, bequem durch die Öffnung in den Innenraum der Getränkebereitungsmaschine einführen zu können, sind Getränkebereitungsmaschinen der vorstehend genannten Art typischerweise mit einem Träger für den Behälter ausgestattet, wobei der Träger derart ausgebildet ist, dass der Behälter in einem vorgegebenen Bereich des Trägers platzierbar ist und der Träger, sofern sich die Abdeckblende in der zweiten Stellung befindet, zusammen mit dem im vorgegebenen Bereich platzierten Behälter durch die Öffnung in den Innenraum einführbar ist und der Behälter dabei an eine vorbestimmte Position im Innenraum bringbar ist, welche derart gewählt ist, dass die Abdeckblende in die erste Stellung bringbar ist, nachdem der Behälter an die vorbestimmte Position im Innenraum gebracht ist.

Im Betrieb einer Getränkebereitungsmaschine entstehen typischerweise sogenannte "Restflüssigkeiten", welche keine Bestandteile eines von der Getränkebereitungsmaschine hergestellten Brühgetränks sind und deshalb während des Betriebs der Getränkebereitungsmaschine von den jeweils hergestellten Brühgetränken separiert und schliesslich entsorgt werden müssen. Als "Restflüssigkeiten" sind in diesem Zusammenhang beispielsweise diejenigen Anteile der beim Aufbrühen verwendeten Brühflüssigkeit zu verstehen, welche beim Aufbrühen in der von der Brüheinrichtung aufgenommenen Menge des jeweiligen Feststoffmaterials absorbiert werden und gegebenenfalls erst allmählich aus der Brüheinrichtung ablaufen können, nachdem das beim Aufbrühen hergestellte Brühgetränk längst aus der Getränkebereitungsmaschine ausgegeben wurde. Als "Restflüssigkeiten" sind in diesem Zusammenhang beispielsweise auch flüssige Reinigungsmittel zu verstehen, welche zu Reinigungszwecken mit denjenigen Bereichen einer Getränkebereitungsmaschine in Kontakt gebracht werden, die im Betrieb der Getränkebereitungsmaschine mit der Brühflüssigkeit oder mit dem erzeugten Brühgetränk in Berührung kommen. Um eine einfache und hygienische Entsorgung der Restflüssigkeiten zu ermöglichen, sind Getränkebereitungsmaschinen der vorstehend genannten Art üblicherweise mit einem Restflüssigkeitsbehälter ausgestattet, welcher zur Aufnahme von Restflüssigkeiten während des Betriebs der Getränkebereitungsmaschine dient und zu diesem Zweck zumindest während des Betriebs der Getränkebereitungsmaschine in der Regel im Innenraum der Getränkebereitungsmaschine platziert werden muss, um die jeweiligen Restflüssigkeiten auf einfache Weise aufnehmen zu können.

Um eine einfache Bedienung von Getränkebereitungsmaschinen der vorstehend genannten Art im Hinblick auf eine Entsorgung des beim Aufbrühen verwendeten Feststoffmaterials und eine Entsorgung der während des Betriebs anfallenden Restflüssigkeiten zu ermöglichen, hat es sich als zweckmässig erwiesen, den Behälter zur Aufnahme des aus der Brüheinrichtung ausgegebenen Feststoffmaterials, den Träger für den vorstehend genannten Behälter, den Restflüssigkeitsbehälter zur Aufnahme von Restflüssigkeiten und die Abdeckblende zum Abdecken der Öffnung derart auszubilden, dass der vorstehend genannte Behälter, der Träger für den Behälter, der Restflüssigkeitsbehälter und die Abdeckblende zu einer Baugruppe zusammensetzbar sind, welche im zusammengesetzten Zustand als Ganzes relativ zum Gehäuse der Getränkebereitungsmaschine platzierbar ist. Der Einfachheit halber ist die Öffnung im Gehäuse der Getränkebereitungsmaschine in diesem Fall derart ausgebildet, dass die vorstehend genannte Braugruppe im zusammengesetzten Zustand als Ganzes durch die Öffnung derart in den Innenraum der Getränkebereitungsmaschine einführbar ist, dass dann, wenn der Behälter zur Aufnahme des aus der Brüheinrichtung ausgegebenen Feststoffmaterials und der Restflüssigkeitsbehälter an jeweils vorbestimmten Positionen platziert sind, automatisch die Abdeckblende in die erste Stellung gebracht ist, in welcher die Abdeckblende die Öffnung auf eine vorbestimmte Weise abdeckt.

Um eine einfache Handhabung der vorstehend genannten Baugruppe zu ermöglichen, ist die Abdeckblende in der Regel an dem Träger für den zur Aufnahme des Feststoffmaterials bestimmten Behälter befestigt und bildet demnach zusammen mit dem Träger eine Einheit. Zusätzlich kann der Restflüssigkeitsbehälter in den Träger für den zur Aufnahme des Feststoffmaterials bestimmten Behälter integriert sein und demnach zusammen mit dem Träger und der Abdeckblende eine Einheit bilden. Auf diese Weise wird vorteilhafterweise erreicht, dass die vorstehend genannte Baugruppe aus einer möglichst geringen Zahl von Einzelteilen (beispielsweise zwei oder drei Einzelteilen) zusammengesetzt sein kann.

Die vorstehend genannte Befestigung der Abdeckblende an dem Träger für den zur Aufnahme des Feststoffmaterials bestimmten Behälter hat allerdings auch Nachteile. Die in der Gehäusewand ausgebildete Öffnung, welche mittels der Abdeckblende abgedeckt werden soll, befindet sich in der Regel an der vorderen Front der Getränkebereitungsmaschine und die Abdeckblende soll deshalb schon aus ästhetischen Gründen mit der Gehäusewand der Getränkebereitungsmaschine harmonieren. Infolgedessen ist die Abdeckblende in der Regel aus denselben, relativ hochwertigen und ästhetisch anmutenden Materialien gefertigt wie die Gehäusewand der Getränkebereitungsmaschine selbst. Dem Design der Gehäusewand entsprechend kann die Abdeckblende beispielweise lackiert oder sogar verchromt sein. Andererseits wird der Träger für den zur Aufnahme des Feststoffmaterials bestimmten Behälter in der Regel während des Betriebs der Getränkebereitungsmaschine relativ stark verschmutzt, zumal sich an dem Träger regelmässig Reste des zum Aufbrühen verwendeten Feststoffmaterials, der Restflüssigkeiten und der jeweils hergestellten Brühgetränke ablagern. Dementsprechend muss der Träger für den zur Aufnahme des Feststoffmaterials bestimmten Behälter und der Restflüssigkeitsbehälter regelmässig einer Reinigung unterzogen werden. Da die Abdeckblende in der Regel aus denselben, relativ hochwertigen Materialien gefertigt ist wie die Gehäusewand der Getränkebereitungsmaschine, muss eine derartige Reinigung auf eine besonders schonende Weise und in der Regel manuell durchgeführt werden. Es ist beispielsweise nicht sinnvoll, den Träger zusammen mit der am Träger befestigten Abdeckblende in einer Geschirrspülmaschine zu reinigen, da die Oberflächen der Abdeckblende bei einer Reinigung in einer Geschirrspülmaschine verfärben oder sogar beschädigt werden können. Dies bedeutet für einen Benutzer einen erheblichen Mehraufwand wegen der Notwendigkeit, die Reinigung des Trägers in regelmässigen Zeitabständen manuell durchführen zu müssen.

Die Druckschrift DE 10 2012 200 312 A1 offenbart eine Getränkebereitungsmaschine für Brühgetränke in Form eines Kaffeevollautomaten, welcher für den Einbau in eine Einbaunische eines Küchenmöbels bestimmt ist und ein Gehäuse mit einer Frontwand aufweist, wobei in einem ersten Abschnitt der Frontwand Bedienelemente zum Bedienen des Kaffeevollautomaten und ein Auslauf für Kaffeegetränke platziert sind und in einem zweiten Abschnitt der Frontwand eine Öffnung in der Frontwand ausgebildet ist, durch welche ein hinter der Frontwand in einem Innenraum des Kaffeeautomaten angeordnetes Servicefach zugänglich ist. Das Servicefach dient insbesondere zur Unterbringung verschiedener Behälter, welche durch die Öffnung in das Servicefach bringbar bzw. durch die Öffnung aus dem Servicefach entnehmbar sind und für einen Betrieb des Kaffeevollautomaten benötigt werden, insbesondere einen Vorratsbehälter für Kaffeebohnen und einen Entsorgungsbehälter zur Aufnahme von gebrühtem Kaffeepulver, welches zur Herstellung eines Kaffeegetränks in einer Brühvorrichtung des Kaffeevollautomaten mit Wasser gebrüht wurde. Im Bereich des zweiten Abschnitts der Frontwand ist eine bewegbare Tür anordnet, welche dazu dient, die im zweiten Abschnitt der Frontwand ausgebildete Öffnung zu verschliessen, und bei Bedarf in eine Stellung bringbar ist, in welcher die Tür die Öffnung nicht verschliesst, sodass das Servicefach durch die Öffnung zugänglich ist. Zu diesem Zweck ist die Tür derart gelagert, dass die Tür um eine vertikale Schwenkachse schwenkbar ist, wobei die vertikale Schwenkachse horizontal entlang einer Führungsschiene geführt ist, sodass die Tür entlang der Führungsschiene in das Servicefach bewegbar und zumindest ein Abschnitt der Tür im Servicefach versenkbar ist. Eine derartige Lagerung der Tür ist aufwändig.

### Zusammenfassung der Erfindung

Der vorliegenden Erfindung liegt deshalb die Aufgabe zugrunde, eine Getränkebereitungsmaschine für Brühgetränke zu schaffen, welche die oben genannten Nachteile vermeidet und insbesondere eine effizientere Reinigung ermöglicht.

Diese Aufgabe wird gemäss der Erfindung gelöst durch eine Getränkebereitungsmaschine für Brühgetränke mit den Merkmalen des Anspruchs 1.

Diese Getränkebereitungsmaschine für Brühgetränke umfasst:
ein Gehäuse mit einer Gehäusewand, welche einen Innenraum umschliesst und mindestens eine Öffnung aufweist; eine im Innenraum angeordnete Brüheinrichtung zum Herstellen eines Brühgetränks durch Aufbrühen einer von der Brüheinrichtung aufgenommenen Menge eines Feststoffmaterials mit einer Brühflüssigkeit, wobei die von der Brüheinrichtung aufgenommene Menge des Feststoffmaterials aus der Brüheinrichtung ausgebbar ist; einen bewegbaren Behälter zur Aufnahme einer aus der Brüheinrichtung ausgegebenen Menge des Feststoffmaterials, welcher Behälter durch die Öffnung in den Innenraum bringbar ist, und eine bewegbare Abdeckblende zum Abdecken der Öffnung, wobei die Abdeckblende zumindest in eine erste Stellung und in eine zweite Stellung bringbar ist und derart ausgebildet ist, dass sie in der ersten Stellung zumindest einen Bereich der Öffnung abdeckt und/oder verschliesst und in der zweiten Stellung die Öffnung derart freigibt, dass der Behälter durch die Öffnung bewegbar ist. Die Abdeckblende ist mit dem Gehäuse über eine Schwenkeinrichtung verbunden, sodass die Abdeckblende um eine Schwenkachse schwenkbar ist und durch Schwenken um diese Schwenkachse zwischen der ersten Stellung und der zweiten Stellung bewegbar ist, wobei die Schwenkeinrichtung einen ersten Hebelarm umfasst, welcher mit der Abdeckblende fest verbunden ist und um die Schwenkachse drehbar gelagert ist.

Gemäss der Erfindung weist die Schwenkeinrichtung einen zweiten Hebelarm auf, welcher am ersten Hebelarm drehbar gelagert ist, sodass der zweite Hebelarm bezüglich des ersten Hebelarms um eine Drehachse drehbar ist, welche im Wesentlichen parallel zur Schwenkachse und in einem Abstand zur Schwenkachse angeordnet ist, wobei die Schwenkeinrichtung ausserdem eine erste Führungseinrichtung umfasst, welche dazu ausgebildet ist, einen ersten Abschnitt des zweiten Hebelarms entlang einer ersten Führungskurve zu führen, wobei sich die erste Führungskurve derart erstreckt, dass der erste Abschnitt des zweiten Hebelarms bei einer Schwenkbewegung der Abdeckblende zwischen der ersten Stellung und der zweiten Stellung entlang der ersten Führungskurve bewegt wird. Ein Federelement ist derart angeordnet, dass ein erster Abschnitt des Federelements am zweiten Hebelarm in einem Abstand zur Drehachse befestigt ist und ein zweiter Abschnitt des Federelements relativ zum ersten Hebelarm und/oder zum Gehäuse fixiert ist.

Dadurch, dass die Abdeckblende mit dem Gehäuse der Getränkebereitungsmaschine über die Schwenkeinrichtung verbunden und durch Schwenken um die Schwenkachse zwischen der ersten Stellung und der zweiten Stellung bewegbar ist, kann der zur Aufnahme des Feststoffmaterials bestimmte Behälter (ggf. zusammen mit weiteren Komponenten der Getränkebereitungsmaschine) aus dem Innenraum entfernt werden, ohne dass die Abdeckblende zusammen mit dem Behälter von der Getränkebereitungsmaschine (und ggf. mit weiteren Komponenten der Getränkebereitungsmaschine) entfernt werden muss: Die Abdeckblende verbleibt am Gehäuse der Getränkebereitungsmaschine, wenn der Behälter (ggf. zusammen mit weiteren Komponenten der Getränkebereitungsmaschine) aus dem Innenraum entfernt und einer Reinigung unterzogen wird. Unter diesen Umständen ist es möglich, den Behälter und alle weiteren Teile, welche zu Reinigungszwecken von der Getränkebereitungsmaschine entfernt werden müssen, ausschliesslich aus Werkstoffen zu fertigen, welche für eine Reinigung in einer Geschirrspülmaschine geeignet sind. Dies ermöglicht eine einfache Reinigung in einer für einen Benutzer zeitsparenden und bequemen Weise.

Dadurch, dass die Schwenkeinrichtung einen ersten Hebelarm umfasst, welcher mit der Abdeckblende fest verbunden ist und um die Schwenkachse drehbar gelagert ist, bietet die Schwenkeinrichtung den Vorteil, dass der erste Hebelarm eine Vielzahl von Möglichkeiten bietet, die Abdeckblende am Gehäuse zu befestigen, wobei ein Konstrukteur der Getränkebereitungsmaschine von der Freiheit, die Form und die Grösse des ersten Hebelarms zu wählen, Gebrauch machen kann, um eine vorteilhafte Anordnung der Abdeckblende zu ermöglichen. Der erste Hebelarm ermöglicht insbesondere, die Anordnung der Schwenkachse relativ zur Abdeckblende frei zu wählen.

Die Getränkebereitungsmaschine ist dadurch charakterisiert, dass die Schwenkeinrichtung einen zweiten Hebelarm aufweist, welcher am ersten Hebelarm drehbar gelagert ist, sodass der zweite Hebelarm bezüglich des ersten Hebelarms um eine Drehachse drehbar ist, welche im Wesentlichen parallel zur Schwenkachse und in einem Abstand zur Schwenkachse angeordnet ist, wobei die Schwenkeinrichtung ausserdem eine erste Führungseinrichtung umfasst, welche dazu ausgebildet ist, einen ersten Abschnitt des zweiten Hebelarms entlang einer ersten Führungskurve zu führen, wobei sich die erste Führungskurve derart erstreckt, dass der erste Abschnitt des zweiten Hebelarms bei einer Schwenkbewegung der Abdeckblende zwischen der ersten Stellung und der zweiten Stellung entlang der ersten Führungskurve bewegt wird. Der erste Hebelarm und der zweite Hebelarm bilden in diesem Fall einen Kniehebel, welcher - abhängig von der Lage des zweiten Hebelarms relativ zum ersten Hebelarm - in unterschiedliche Lagen bringbar ist und dementsprechend geeignet ist, auf unterschiedliche Weisen relativ grosse Drehmomente auf die Abdeckblende zu übertragen. Durch eine geeignete Wahl der Anordnung des zweiten Hebelarms relativ zum ersten Hebelarm ist es deshalb möglich, die Erzeugung von Drehmomenten, welche auf die Abdeckblende wirken, zu kontrollieren und auf diese Weise eine Bewegung der Abdeckblende zwischen der ersten Stellung und der zweiten Stellung zu steuern. Die jeweilige Anordnung des zweiten Hebelarms relativ zum ersten Hebelarm wird dabei - abhängig von der jeweiligen Stellung der Abdeckblende - von der Form der ersten Führungskurve bestimmt.

Die Getränkebereitungsmaschine ist ausserdem mit einem Federelement ausgestattet, wobei ein erster Abschnitt des Federelements am zweiten Hebelarm in einem Abstand zur Drehachse befestigt ist und ein zweiter Abschnitt des Federelements relativ zum ersten Hebelarm und/oder zum Gehäuse fixiert ist. Ein derartiges Federelement ist in der Regel elastisch deformierbar und dementsprechend geeignet, abhängig von seiner elastischen Deformation, eine Kraft zu erzeugen, welche direkt auf den zweiten Hebelarm wirkt und - da der zweite Hebelarm am ersten Hebelarm drehbar gelagert ist - indirekt auf den ersten Hebelarm und somit auch auf die Abdeckblende wirken kann.

Insbesondere ist es dabei realisierbar, dass das Federelement vorgespannt ist, sodass mittels des Federelements ein auf den zweiten Hebelarm wirkendes Drehmoment bezüglich der Drehachse erzeugbar ist. Die Grösse und die Richtung des jeweils erzeugten Drehmoments hängen von der jeweiligen Anordnung des Federelements relativ zum zweiten Hebelarm ab.

Dementsprechend ist insbesondere realisierbar, dass, falls sich die Abdeckblende in der ersten Stellung befindet, der zweite Hebelarm relativ zum ersten Hebelarm derart angeordnet ist, dass das Federelement ein auf den zweiten Hebelarm wirkendes Drehmoment bezüglich der Drehachse erzeugt, welches derart gerichtet ist, dass die Abdeckblende mittels des vom Federelement erzeugten Drehmoments in der ersten Stellung gehalten ist. Zu diesem Zweck kann das Federelement derart vorgespannt sein, dass das Federelement über den zweiten Hebelarm ein auf den ersten Hebelarm wirkendes erstes Drehmoment erzeugt, welches dasjenige auf den ersten Hebelarm wirkende Drehmoment kompensiert, welches die Abdeckblende aufgrund ihres Gewichts auf den ersten Hebelarm erzeugt, wenn sich die Abdeckblende in der ersten Stellung befindet. Auf diese Weise ist es möglich, die Abdeckblende derart zu halten, dass sich die Abdeckblende in einer stabilen Gleichgewichtslage befindet, wenn sie in die erste Stellung gebracht ist.

In einer weiteren Variante kann die Getränkebereitungsmaschine mit einem ersten mechanischen Anschlag für den ersten Hebelarm und/oder den zweiten Hebelarm ausgestattet sein, wobei der erste mechanische Anschlag derart angeordnet ist, dass der erste Hebelarm und/oder der zweite Hebelarm mit dem ersten mechanischen Anschlag in Kontakt ist (bzw. sind), falls die Abdeckblende in die erste Stellung gebracht ist, wobei der erste Hebelarm und/oder der zweite Hebelarm mittels des vom Federelement erzeugten Drehmoments gegen den ersten mechanischen Anschlag gedrückt ist (bzw. sind). In dieser Variante befinden sich der erste Hebelarm, der zweite Hebelarm und die Abdeckblende jeweils in einer stabilen Gleichgewichtslage, wenn die Abdeckblende in die erste Stellung gebracht ist. Um die Abdeckblende aus dieser stabilen Gleichgewichtslage zu bringen, ist es in diesem Fall nötig, eine vom Federelement erzeugbare Rückstellkraft zu überwinden, welche auf den ersten Hebelarm wirkt und umso grösser ist, je stärker das Federelement vorgespannt ist.

Weiterhin kann die Getränkebereitungsmaschine mit einem Sensor ausgestattet sein, welcher ausgebildet ist zu detektieren, ob der erste Hebelarm mit dem ersten mechanischen Anschlag in Kontakt gebracht ist, und/oder zu detektieren, ob der zweite Hebelarm mit dem ersten mechanischen Anschlag in Kontakt gebracht ist. Der Sensor ist demnach geeignet zu kontrollieren, ob die Abdeckblende in die erste Stellung gebracht ist und dementsprechend die Öffnung gerade abdeckt bzw. verschliesst. Der Sensor ist ausgebildet, ein Signal zu erzeugen, welches eine entsprechende Information bezüglich der Stellung der Abdeckblende enthält. Dieses vom Sensor erzeugte Signal kann einer Steuereinrichtung der Getränkebereitungsmaschine zur Verfügung gestellt werden, um eine Steuerung der Getränkebereitungsmaschine in Abhängigkeit von dem Signal zu ermöglichen.

Zusätzlich oder alternativ ist die Getränkebereitungsmaschine derart realisierbar, dass, falls sich die Abdeckblende in der ersten Stellung oder in einer Zwischenstellung zwischen der ersten Stellung und der zweiten Stellung befindet, der zweite Hebelarm relativ zum ersten Hebelarm derart angeordnet ist, dass das Federelement ein auf den zweiten Hebelarm wirkendes Drehmoment bezüglich der Drehachse erzeugt, welches derart gerichtet ist, dass die Abdeckblende mittels des erzeugten Drehmoments in die zweite Stellung bewegbar ist. In diesem Fall wird erreicht, dass die Abdeckblende aus einer Stellung, in der die Abdeckblende die Öffnung im Wesentlichen abdeckt, aufgrund des vom Federelement erzeugten Drehmoments automatisch in die zweite Stellung bewegt wird, in welcher die Abdeckblende die Öffnung nicht abdeckt. Ob das Federelement in der Lage ist, das entsprechende Drehmoment zu erzeugen, wenn sich die Abdeckblende in der ersten Stellung befindet, oder ob das Federelement in der Lage ist, das entsprechende Drehmoment erst zu erzeugen, wenn sich die Abdeckblende in einer Zwischenstellung zwischen der ersten Stellung und der zweiten Stellung befindet ("Zwischenstellung" bedeutet in diesem Zusammenhang, dass sich Abdeckblende auf einem Weg zwischen der ersten Stellung und der zweiten Stellung sowohl in einer Distanz zur ersten Stellung als auch in einer Distanz zur zweiten Stellung befindet) hängt hierbei von der Anordnung des ersten Hebelarms relativ zum zweiten Hebelarm ab und kann durch eine entsprechende Konstruktion des ersten Hebelarms, des zweiten Hebelarms und der ersten Führungskurve eingestellt werden (entsprechend Wunschvorstellungen der Benutzer der Getränkebereitungsmaschine).

Die Getränkebereitungsmaschine ist insbesondere derart realisierbar, dass die Abdeckblende mittels des vom Federelement erzeugten Drehmoments in der zweiten Stellung haltbar ist.

Zu diesem Zweck kann das Federelement derart vorgespannt sein, dass das Federelement über den zweiten Hebelarm ein auf den ersten Hebelarm wirkendes erstes Drehmoment erzeugt, welches dasjenige auf den ersten Hebelarm wirkende Drehmoment kompensiert, welches die Abdeckblende aufgrund ihres Gewichts auf den ersten Hebelarm erzeugt, wenn sich die Abdeckblende in der zweiten Stellung befindet. Auf diese Weise ist es möglich, die Abdeckblende derart zu halten, dass sich die Abdeckblende in einer stabilen Gleichgewichtslage befindet, wenn sie in die zweite Stellung gebracht ist.

Zusätzlich oder alternativ kann die Getränkebereitungsmaschine mit mindestens einem zweiten mechanischen Anschlag für den ersten Hebelarm und/oder den zweiten Hebelarm ausgestattet sein, wobei der mindestens eine zweite mechanische Anschlag derart angeordnet ist, dass der erste Hebelarm und/oder der zweite Hebelarm mit dem mindestens einen zweiten mechanischen Anschlag in Kontakt ist (bzw. sind), falls die Abdeckblende in die zweite Stellung gebracht ist, wobei der erste Hebelarm und/oder der zweite Hebelarm mittels des vom Federelement erzeugten Drehmoments gegen den mindestens einen zweiten mechanischen Anschlag gedrückt ist (bzw. sind).

Gemäss einer Weiterentwicklung der vorstehend genannten Ausführungsformen kann die Getränkebereitungsmaschine derart ausgebildet sein, dass die Schwenkeinrichtung eine zweite Führungseinrichtung umfasst, welche dazu ausgebildet ist, einen zweiten Abschnitt des zweiten Hebelarms entlang einer zweiten Führungskurve zu führen, wobei sich die zweite Führungskurve derart erstreckt, dass der zweite Abschnitt des zweiten Hebelarms bei einer Schwenkbewegung der Abdeckblende zwischen der ersten Stellung und der zweiten Stellung entlang der zweiten Führungskurve bewegt wird. Die zweite Führungseinrichtung verbessert die mechanische Stabilität der Schwenkeinrichtung.

Gemäss einer Weiterentwicklung der vorstehend genannten Ausführungsformen kann die Getränkebereitungsmaschine zusätzlich mit einem Träger für den Behälter ausgestattet sein, wobei der Träger derart ausgebildet ist, dass der Behälter in einem vorgegebenen Bereich des Trägers platzierbar ist und der Träger, sofern sich die Abdeckblende in der zweiten Stellung befindet, zusammen mit dem im vorgegebenen Bereich platzierten Behälter durch die Öffnung in den Innenraum einführbar ist und der Behälter dabei an eine vorbestimmte Position im Innenraum bringbar ist, welche derart gewählt ist, dass die Abdeckblende in die erste Stellung bringbar ist. Der Träger ermöglicht es auf eine bequeme Weise, den Behälter aus der äusseren Umgebung der Getränkebereitungsmaschine in den Innenraum einzuführen, im Innenraum zu positionieren und bei Bedarf wieder aus dem Innenraum zu entfernen.

Alternativ oder zusätzlich kann der Träger zusammen mit dem im vorgegebenen Bereich platzierten Behälter entlang eines vorgegebenen Weges durch die Öffnung aus dem Innenraum herausführbar sein und die Abdeckblende derart geformt sein, dass, sofern sich die Abdeckblende in der ersten Stellung befindet, mindestens ein Bereich des Behälters und/oder mindestens ein Bereich des Trägers in einen mechanischen Kontakt mit der Abdeckblende bringbar ist, wenn der Träger zusammen mit dem im vorgegebenen Bereich platzierten Behälter entlang des vorgegebenen Weges durch die Öffnung aus dem Innenraum herausgeführt wird.

In diesem Fall kann die Getränkebereitungsmaschine insbesondere auch derart realisiert sein, dass die Abdeckblende derart in einen mechanischen Kontakt mit dem mindestens einen Bereich des Behälters und/oder mit dem mindestens einen Bereich des Trägers bringbar ist, dass die Abdeckblende mit dem Behälter und/oder mit dem Träger mitnehmbar und dabei aus der ersten Lage heraus um die Schwenkachse schwenkbar ist, wenn der Träger zusammen mit dem im vorgegebenen Bereich platzierten Behälter entlang des vorgegebenen Weges durch die Öffnung aus dem Innenraum herausgeführt wird. Bei dieser Realisierung der Getränkebereitungsmaschine kann sich die Abdeckblende zunächst in einer stabilen Gleichgewichtslage befinden, wenn die Abdeckblende in die erste Lage gebracht ist. Wird der Träger nun entlang des vorgegebenen Weges durch die Öffnung bewegt, dann wird die Abdeckblende automatisch mit dem Träger bzw. dem Behälter mitbewegt, sodass die Abdeckblende aus der ersten Stellung zumindest in eine Zwischenstellung zwischen der ersten Stellung und der zweiten Stellung befördert wird. Das Federelement kann in diesem Fall derart ausgebildet sein, dass die Abdeckblende aufgrund eines vom dem Federelement erzeugten, auf den ersten Hebelarm wirkenden Drehmoments - ausgehend von der Zwischenstellung - automatisch in die zweite Stellung befördert wird.

In einer Weiterentwicklung der vorstehend genannten Ausführungsformen kann der Träger einen Restflüssigkeitsbehälter zur Aufnahme einer Restflüssigkeit umfassen, welche in einem Betrieb der Getränkebereitungsmaschine abgebbar ist.

Die vorstehend genannten Getränkebereitungsmaschinen sind derart realisierbar, dass die Brüheinrichtung zum Herstellen mindestens eines der folgenden Brühgetränke ausgebildet ist: Kaffee und/oder Tee.

### Kurze Beschreibung der Zeichnungen

Weitere Einzelheiten der Erfindung und insbesondere beispielhafte Ausführungsformen der erfindungsgemässen Vorrichtung werden im Folgenden anhand der beigefügten Zeichnungen erläutert. Es zeigen:
- Fig. 1: eine schematische Darstellung einer erfindungsgemässen Getränkebereitungsmaschine, mit einem durch eine Öffnung in einer Gehäusewand in einen Innenraum der Getränkebereitungsmaschine eingeführten Behälter und mit einer Abdeckblende zum Abdecken der Öffnung, wobei die Abdeckblende in eine erste Stellung gebracht ist;
- Fig. 2: die Getränkebereitungsmaschine gemäss Fig. 1, wobei die Abdeckblende in eine zweite Stellung gebracht ist;
- Fig. 3: die Getränkebereitungsmaschine gemäss Fig. 2, wobei der Behälter ausserhalb des Innenraums platziert ist.

### Beschreibung von Ausführungsformen

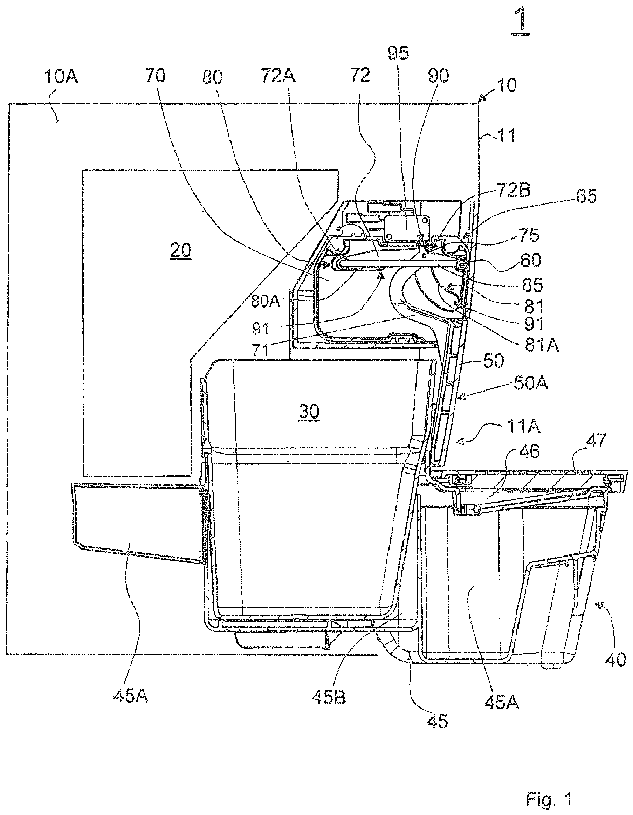

Die Fig. 1-3 zeigen eine erfindungsgemässe Getränkebereitungsmaschine 1 für Brühgetränke, welche im vorliegenden Beispiel als Kaffeemaschine zur Herstellung von Kaffeegetränken konzipiert ist. Die Art des Brühgetränks ist für die folgende Darstellung nicht relevant, sodass die folgenden Erörterungen auch für Getränkebereitungsmaschinen, welche zur Herstellung anderer Brühgetränke als Kaffee dienen, als zutreffend angesehen werden können.

Wie aus Fig. 1-3 ersichtlich, umfasst die Getränkebereitungsmaschine 1 ein Gehäuse 10 mit einer Gehäusewand 11, welche einen Innenraum 10A umschliesst und mindestens eine Öffnung 11A aufweist, und eine im Innenraum 10A angeordnete Brüheinrichtung 20 zum Herstellen eines Brühgetränks durch Aufbrühen einer von der Brüheinrichtung 20 aufgenommenen Menge eines Feststoffmaterials (z.B. Kaffeepulver) mit einer Brühflüssigkeit (z.B. Wasser, vorzugsweise heisses Wasser), wobei die von der Brüheinrichtung 20 aufgenommene Menge des Feststoffmaterials aus der Brüheinrichtung 20 ausgebbar ist.

Um eine einfache Entsorgung des aus der Brüheinrichtung ausgegeben Feststoffmaterials zu ermöglichen, ist ein bewegbarer Behälter 30 vorhanden, welcher zur Aufnahme einer aus der Brüheinrichtung 20 ausgegebenen Menge des Feststoffmaterials geeignet ist und zu diesem Zweck durch die Öffnung 11A in den Innenraum 10A der Getränkebereitungsmaschine 1 bringbar ist.

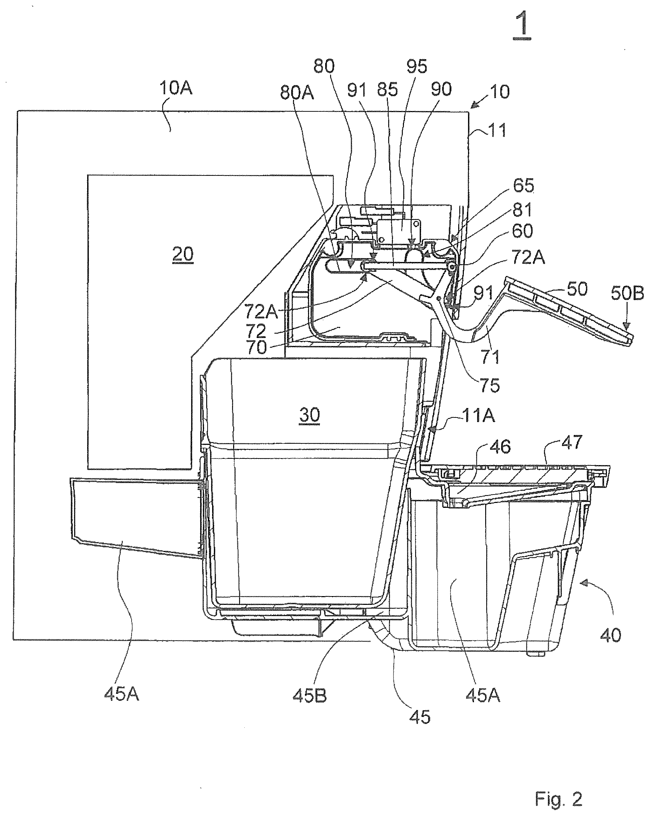

In Fig. 1 und 2 ist der Behälter 30 in einer Situation dargestellt, in welcher der Behälter 30 in eine vorgegebene Position relativ zur Brüheinrichtung 20 gebracht ist, in welcher eine aus der Brüheinrichtung 20 ausgegebene Menge des Feststoffmaterials auf konventionelle Weise automatisch in den Behälter 30 gefördert werden kann. Einzelheiten zum Befüllen des Behälters 30 mit dem aus der Brüheinrichtung 20 ausgegebenen Feststoffmaterial sind in diesem Zusammenhang nicht relevant und werden deshalb nicht näher erläutert.

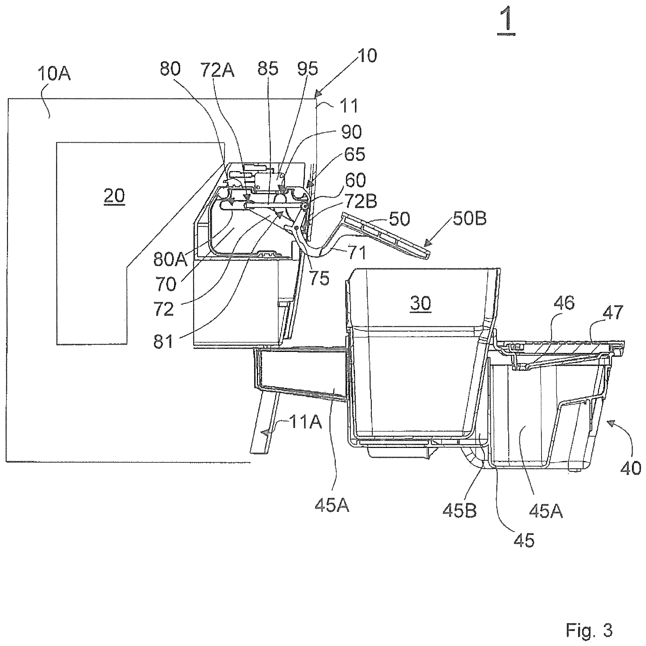

Die Getränkebereitungsmaschine 1 umfasst weiterhin eine bewegbare Abdeckblende 50 zum Abdecken der Öffnung 11A. Die Abdeckblende 50 ist zumindest in eine erste Stellung 50A (wie in Fig. 1 dargestellt) und in eine zweite Stellung 50B (wie in Fig. 2 und 3 dargestellt) bringbar. Weiterhin ist die Abdeckblende 50 derart geformt, dass sie in der ersten Stellung 50A zumindest einen Bereich der Öffnung 11A abdeckt und/oder verschliesst (Fig. 1) und in der zweiten Stellung 50B die Öffnung 11A derart freigibt, dass der Behälter 30 durch die Öffnung 11A bewegbar ist (Fig. 2 und 3).

Die Abdeckblende 50 ist insbesondere mit dem Gehäuse 10 über eine Schwenkeinrichtung 65 verbunden, welche eine Schwenkachse 60 aufweist und die Abdeckblende 50 derart bewegbar hält, dass die Abdeckblende 50 um die Schwenkachse 60 schwenkbar ist und durch Schwenken um diese Schwenkachse 60 zwischen der ersten Stellung 50A und der zweiten Stellung 50B bewegbar ist. Die Abdeckblende 50 ist insbesondere derart kontinuierlich um die Schwenkachse 60 schwenkbar, dass die Abdeckblende 50 in jede beliebige Zwischenstellung zwischen der ersten Stellung 50A und der zweiten Stellung 50B gebracht werden kann.

Wie aus Fig. 1-3 ersichtlich, sind alle Komponenten der Schwenkeinrichtung 65 an einer im Wesentlichen ebenen Montageplatte 70 befestigt, welche im Innenraum 10A an der Gehäusewand 11 in der Nähe der Öffnung 11A angeordnet ist. Die Schwenkachse 60 ist im vorliegenden Beispiel im Wesentlichen senkrecht zu einer Oberfläche der Montageplatte 70 gerichtet.

Die Schwenkeinrichtung 65 umfasst einen ersten Hebelarm 71, welcher an einem seiner beiden Enden mit der Abdeckblende 50 fest verbunden und an dem anderen seiner beiden Enden an der Montageplatte 70 mittels eines Drehlagers um die Schwenkachse 60 drehbar gelagert ist, sodass die Abdeckblende 50 um die Schwenkachse 60 schwenkbar ist.

Die Schwenkeinrichtung 65 weist weiterhin einen zweiten Hebelarm 72 auf, welcher am ersten Hebelarm 71 drehbar gelagert ist, sodass der zweite Hebelarm 72 bezüglich des ersten Hebelarms 71 um eine Drehachse 75 drehbar ist, welche im Wesentlichen parallel zur Schwenkachse 60 und in einem Abstand zur Schwenkachse 60 angeordnet ist. Auf diese Weise bilden der erste Hebelarm 71 und der zweite Hebelarm 72 zusammen einen Kniehebel, welcher dadurch in unterschiedliche Lagen gebracht werden kann, dass der zweite Hebelarm 72 bezüglich des ersten Hebelarms 71 um die Drehachse 75 drehbar ist. Durch Drehen des ersten Hebelarms 71 um die Schwenkachse 60 und durch Drehen des zweiten Hebelarms 72 um die Drehachse 75 relativ zum ersten Hebelarm 71 sind der erste Hebelarm 71 und der zweite Hebelarm 72 im Wesentlichen parallel zu einer Oberfläche der Montageplatte 70 bewegbar.

Die Schwenkeinrichtung 65 umfasst ausserdem eine erste Führungseinrichtung 80, welche dazu ausgebildet ist, einen ersten Abschnitt 72A des zweiten Hebelarms 72 entlang einer ersten Führungskurve 80A zu führen, wobei sich die erste Führungskurve 80A derart erstreckt, dass der erste Abschnitt 72A des zweiten Hebelarms 72 bei einer Schwenkbewegung der Abdeckblende 50 zwischen der ersten Stellung 50A und der zweiten Stellung 50B entlang der ersten Führungskurve 80A bewegt wird. Im vorliegenden Beispiel ist die erste Führungseinrichtung 80 in Form eines länglichen Schlitzes realisiert, welcher in der Montageplatte 70 derart ausgebildet ist, dass er sich im Wesentlichen in Richtung einer Horizontalen erstreckt (Fig. 1-3). Der erste Abschnitt 72A des zweiten Hebelarms 72 ist an einem von der Drehachse 75 abgewandten Ende des zweiten Hebelarms ausgebildet und derart geformt, dass der erste Abschnitt 72A des zweiten Hebelarms 72 in den Schlitz hineinragt, welcher die erste Führungseinrichtung 80 bildet. Der erste Abschnitt 72A des zweiten Hebelarms 72 wird bei einer Schwenkbewegung der Abdeckblende 50 zwischen der ersten Stellung 50A und der zweiten Stellung 50B in der Längsrichtung des vorstehend genannten Schlitzes bewegt, d.h. die erste Führungskurve 80A erstreckt sich dementsprechend in der Längsrichtung dieses Schlitzes.

Wie aus Fig. 1-3 ersichtlich, umfasst der zweite Hebelarm 72 einen zweiten Abschnitt 72B, welcher an einem dem ersten Abschnitt 72A gegenüberliegenden Ende des zweiten Hebelarms 72 ausgebildet ist. Im vorliegenden Beispiel ist die Drehachse 75 derart angeordnet, dass die Drehachse 75 den zweiten Hebelarm 72 im zweiten Abschnitt 72B kreuzt.

Wie Fig. 1-3 andeuten, kann die Schwenkeinrichtung 65 optional eine zweite Führungseinrichtung 81 umfassen, welche dazu ausgebildet ist, den zweiten Abschnitt 72B des zweiten Hebelarms 72 entlang einer zweiten Führungskurve 81A zu führen, wobei sich die zweite Führungskurve 81A derart erstreckt, dass der zweite Abschnitt 72B des zweiten Hebelarms 72 bei einer Schwenkbewegung der Abdeckblende 50 zwischen der ersten Stellung 50A und der zweiten Stellung 50B entlang der zweiten Führungskurve 81A bewegt wird. Im vorliegenden Beispiel ist die zweite Führungseinrichtung 81 in Form eines länglichen Schlitzes realisiert, welcher in der Montageplatte 70 ausgebildet ist. Der zweite Abschnitt 72B des zweiten Hebelarms 72 ist derart geformt, dass dieser zweite Abschnitt 72B in den Schlitz hineinragt, welcher die zweite Führungseinrichtung 81 bildet. Der zweite Abschnitt 72B des zweiten Hebelarms 72 wird bei einer Schwenkbewegung der Abdeckblende 50 zwischen der ersten Stellung 50A und der zweiten Stellung 50B in der Längsrichtung des vorstehend genannten Schlitzes bewegt, d.h. die zweite Führungskurve 81A erstreckt sich dementsprechend in der Längsrichtung dieses Schlitzes. Da die Drehachse 75 den zweiten Hebelarm 72 im zweiten Abschnitt 72B kreuzt, wird die Drehachse 75 ebenfalls entlang der zweiten Führungskurve 81A geführt, wenn die Abdeckblende 50 zwischen der ersten Stellung 50A und der zweiten Stellung 50B geschwenkt wird. Dementsprechend erstreckt sich die zweite Führungskurve 81A im vorliegenden Beispiel im Wesentlichen entlang einer Umfangslinie eines Kreises, dessen Mittelpunkt durch die Schwenkachse 60 definiert ist.

Wie aus Fig. 1-3 ersichtlich, umfasst die Schwenkeinrichtung 65 ein Federelement 85. Das Federelement 85 ist im vorliegenden Beispiel als längliches Band aus einem elastischen Material realisiert, könnte jedoch durch ein Federelement gemäss einer anderen Konstruktion ersetzt werden. Ein erster Abschnitt des Federelements 85 ist am zweiten Hebelarm 72 in einem Abstand zur Drehachse 75 (beispielsweise im Bereich des ersten Abschnitts 72A des zweiten Hebelarms 72) befestigt und ein zweiter Abschnitt des Federelements 85 ist relativ zum ersten Hebelarm 71 bzw. zum Gehäuse 10 fixiert. Im vorliegenden Beispiel bilden der vorstehend genannte erste Abschnitt des Federelements 85 und der vorstehend genannte zweite Abschnitt des Federelements 85 die beiden gegenüberliegenden Enden des Elements 85, wobei eines der Enden des Federelements 85 an der Schwenkachse 60 fixiert ist.

Das Federelement 85 ist im vorliegenden Beispiel vorgespannt, sodass mittels des Federelements 85 ein auf den zweiten Hebelarm 72 wirkendes Drehmoment bezüglich der Drehachse 75 erzeugbar ist. Die Grösse und die Richtung des derart erzeugten Drehmoments hängen dabei jeweils von der Anordnung des ersten Hebelarms 71 relativ zum zweiten Hebelarm 72 und von der Anordnung des Federelements 85 relativ zu den beiden Hebelarmen 71, 72 ab.

Im vorliegenden Beispiel ist, falls sich die Abdeckblende 50 in der ersten Stellung 50A befindet (Fig. 1), der zweite Hebelarm 72 relativ zum ersten Hebelarm 71 derart angeordnet, dass das Federelement 85 ein auf den zweiten Hebelarm 72 wirkendes Drehmoment bezüglich der Drehachse 75 erzeugt, welches derart gerichtet ist, dass die Abdeckblende 50 mittels des vom Federelement 85 erzeugten Drehmoments in der ersten Stellung 50A gehalten ist.

Wie Fig. 1 andeutet, kann die Schwenkeinrichtung 65 mit einem ersten mechanischen Anschlag 90 für den ersten Hebelarm 71 und/oder den zweiten Hebelarm 72 ausgestattet sein, wobei der erste mechanische Anschlag 90 derart angeordnet ist, dass der erste Hebelarm 71 und/oder der zweite Hebelarm 72 mit dem ersten mechanischen Anschlag 90 in Kontakt ist (bzw. sind), falls die Abdeckblende 50 in die erste Stellung 50A gebracht ist, wobei der erste Hebelarm 71 und/oder der zweite Hebelarm 72 mittels des vom Federelement 85 erzeugten Drehmoments gegen den ersten mechanischen Anschlag 90 gedrückt ist (bzw. sind).

Weiterhin kann die Schwenkeinrichtung 65 optional mit einem Sensor 95 ausgestattet sein, welcher ausgebildet ist zu detektieren, ob der erste Hebelarm 71 mit dem ersten mechanischen Anschlag 90 in Kontakt gebracht ist, und/oder zu detektieren, ob der zweite Hebelarm 72 mit dem ersten mechanischen Anschlag 90 in Kontakt gebracht ist. Der Sensor 95 ermöglicht eine Überwachung, ob sich die Abdeckblende 50 momentan in der ersten Stellung 50A befindet. Entsprechend kann der Sensor 95 ausgelegt sein, ein Sensorsignal zu erzeugen, welches eine Information darüber enthält, ob sich die Abdeckblende 50 momentan in der ersten Stellung 50A befindet. Weiterhin kann der Sensor 95 ausgelegt sein, das Sensorsignal an eine (in den Figuren nicht dargestellte) Steuereinrichtung der Getränkebereitungsmaschine 1 zu übermitteln, um eine Steuerung der Getränkebereitungsmaschine 1 in Abhängigkeit von diesem Sensorsignal zu ermöglichen.

Im vorliegenden Beispiel ist weiterhin, falls sich die Abdeckblende 50 in einer Zwischenstellung zwischen der ersten Stellung 50A und der zweiten Stellung 50B befindet, der zweite Hebelarm 72 relativ zum ersten Hebelarm 71 derart angeordnet, dass das Federelement 85 ein auf den zweiten Hebelarm 72 wirkendes Drehmoment bezüglich der Drehachse 75 erzeugt, welches derart gerichtet ist, dass die Abdeckblende 50 mittels des erzeugten Drehmoments in die zweite Stellung 50B bewegbar ist. Demnach sind im vorliegenden Beispiel die Anordnung des ersten Hebelarms 71 und des zweiten Hebelarms 72 derart gewählt, dass die Abdeckblende 50 lediglich aus der ersten Stellung 50 in eine Zwischenstellung zwischen der ersten Stellung 50A und der zweiten Stellung 50B geschwenkt werden muss, um zu erreichen, dass die Abdeckblende 50 aufgrund des vom Federelement 85 erzeugten Drehmoments automatisch in die zweite Stellung geschwenkt wird, sobald die Abdeckblende (beispielsweise manuell) in die Zwischenstellung gebracht ist.

Das Federelement 85 kann insbesondere derart angeordnet sein, dass die Abdeckblende 50 mittels des vom Federelement 85 erzeugten Drehmoments in der zweiten Stellung 50B haltbar ist.

Wie Fig. 1-3 weiterhin andeuten, kann die Getränkebereitungsmaschine 1 ausserdem optional mit mindestens einem zweiten mechanischen Anschlag 91 für den ersten Hebelarm 71 und/oder den zweiten Hebelarm 72 ausgestattet sein, wobei der mindestens eine zweite mechanische Anschlag 91 derart angeordnet ist, dass der erste Hebelarm 71 und/oder der zweite Hebelarm 72 mit dem mindestens einen zweiten mechanischen Anschlag 91 in Kontakt ist (bzw. sind), falls die Abdeckblende 50 in die zweite Stellung 50B gebracht ist, wobei der erste Hebelarm 71 und/oder der zweite Hebelarm 72 mittels des vom Federelement 85 erzeugten Drehmoments gegen den mindestens einen zweiten mechanischen Anschlag 91 gedrückt ist (bzw. sind). Im vorliegenden Beispiel ist sowohl an einem Ende der ersten Führungseinrichtung 80 als auch an einem Ende der zweiten Führungseinrichtung 81 je ein zweiter mechanischer Anschlag 91 angeordnet (Fig. 1-3).

Wie aus Fig. 1-3 ersichtlich, ist die Getränkebereitungsmaschine 1 mit einem Träger 40 für den Behälter 30 ausgestattet, wobei der Träger 40 derart ausgebildet ist, dass der Behälter 30 in einem vorgegebenen Bereich 45B des Trägers 40 platzierbar ist und der Träger 40, sofern sich die Abdeckblende 50 in der zweiten Stellung befindet, zusammen mit dem im vorgegebenen Bereich 45B platzierten Behälter 30 durch die Öffnung 11A in den Innenraum 10A einführbar ist und der Behälter 30 dabei an eine vorbestimmte Position im Innenraum 10A bringbar ist, welche derart gewählt ist, dass die Abdeckblende 50 in die erste Stellung bringbar ist (Fig. 1).

Der Träger 40 ist zusammen mit dem im vorgegebenen Bereich 45B platzierten Behälter 30 entlang eines vorgegebenen Weges durch die Öffnung 11A aus dem Innenraum 10A herausführbar, wobei die Abdeckblende 50 derart geformt ist, dass, sofern sich die Abdeckblende 50 in der ersten Stellung 50A befindet, mindestens ein Bereich des Behälters 30 und/oder mindestens ein Bereich des Trägers 40 in einen mechanischen Kontakt mit der Abdeckblende 50 bringbar ist (bzw. sind), wenn der Träger 40 zusammen mit dem im vorgegebenen Bereich 45B platzierten Behälter 30 entlang des vorgegebenen Weges durch die Öffnung 11A aus dem Innenraum 10A herausgeführt wird (Fig. 1).

Wie Fig. 1 andeutet, ist der Träger 40 derart geformt, dass zumindest ein Abschnitt des Trägers 40 unterhalb eines unteren Randes der Abdeckblende 50 aus dem Innenraum 10A heraus durch die Öffnung 11A ragt, wenn sich die Abdeckblende 50 in der ersten Lage 50A befindet und der Träger 40 derart platziert ist, dass sich der Behälter 30 im Innenraum 10A befindet. Der Träger 40 ist deshalb für einen Benutzer zugänglich, wenn sich die Abdeckblende 50 in der ersten Lage 50A befindet, sodass ein Benutzer den Träger 40 erfassen kann, um den Träger 40 manuell durch die Öffnung 11A aus dem Innenraum 10A herauszuziehen.

Wenn der Träger 40 zusammen mit dem im vorgegebenen Bereich 45B platzierten Behälter 30 durch die Öffnung 11A aus dem Innenraum 10A herausgezogen wird, ist die Abdeckblende 50 derart in einen mechanischen Kontakt mit mindestens einem Bereich des Behälters 30 und/oder mit mindestens einem Bereich des Trägers 40 bringbar, dass die Abdeckblende 50 mit dem Behälter 30 und/oder mit dem Träger 40 mitnehmbar und dabei aus der ersten Lage 50A heraus um die Schwenkachse 60 schwenkbar ist, sodass die Abdeckblende 50 beim Herausziehen des Trägers 40 zumindest in eine Zwischenstellung zwischen der ersten Stellung 50A und der zweiten Stellung 50B mitgenommen wird.

Wie bereits erwähnt, ist das Federelement 85 vorteilhafterweise derart angeordnet, dass das Federelement 85 ein Drehmoment erzeugt, welches derart gerichtet ist, dass die Abdeckblende 50 nach Erreichen der vorstehend genannten Zwischenstellung automatisch in zweite Stellung 50B bewegt und in der zweiten Stellung 50B gehalten wird (Fig. 3). Ausgehend von der in Fig. 3 dargestellten Situation, kann der Träger 40 zusammen mit dem Behälter 30 in den Innenraum 10A eingeführt werden und die Abdeckblende 50 manuell von der zweiten Stellung 50B in die erste Stellung 50A geschwenkt werden, um die Öffnung 11A wieder abzudecken und/oder zu verschliessen (Fig. 1). Beim Schwenken der Abdeckblende 50 aus der zweiten Stellung 50B in Richtung auf die erste Stellung 50 muss das Federelement 85 mehr und mehr elastisch gespannt werden, sodass das Abdeckblende 50 nur durch Überwinden einer vom Federelement 85 erzeugten Rückstellkraft aus der zweiten Stellung 50B in Richtung auf die erste Stellung 50A bewegt werden kann.

Wie Fig. 1-3 andeuten, umfasst der Träger 40 im vorliegenden Beispiel ein Unterteil 45, in welches ein Restflüssigkeitsbehälter 45A zur Aufnahme einer Restflüssigkeit und der vorgegebene Bereich 45B zur Aufnahme des Trägers 40 integriert ist. Der Träger 40 umfasst ausserdem eine auf das Unterteil 45 aufsetzbare Abdeckung 46, mit welcher der Restflüssigkeitsbehälter 45A abdeckbar ist, und eine auf das Unterteil 45 aufsetzbare Trinkgefässablage 47, auf welche im Betrieb der Getränkebereitungsmaschine 1 Trinkgefässe abstellbar sind, welche zur Aufnahme der von der Getränkebereitungsmaschine 1 zubereiteten Brühgetränke dienen (diesbezügliche Einzelheiten sind in den Figuren nicht dargestellt).

## Patentansprüche

1. Getränkebereitungsmaschine (1) für Brühgetränke, welche umfasst:
ein Gehäuse (10) mit einer Gehäusewand (11), welche einen Innenraum (10A) umschliesst und mindestens eine Öffnung (11A) aufweist;
eine im Innenraum (10A) angeordnete Brüheinrichtung (20) zum Herstellen eines Brühgetränks durch Aufbrühen einer von der Brüheinrichtung (20) aufgenommenen Menge eines Feststoffmaterials mit einer Brühflüssigkeit, wobei die von der Brüheinrichtung (20) aufgenommene Menge des Feststoffmaterials aus der Brüheinrichtung (20) ausgebbar ist;
einen bewegbaren Behälter (30) zur Aufnahme einer aus der Brüheinrichtung (20) ausgegebenen Menge des Feststoffmaterials, welcher Behälter (30) durch die Öffnung (11A) in den Innenraum (10A) bringbar ist;
eine bewegbare Abdeckblende (50) zum Abdecken der Öffnung (11A), wobei die Abdeckblende (50) zumindest in eine erste Stellung (50A) und in eine zweite Stellung (50B) bringbar ist und derart ausgebildet ist, dass sie in der ersten Stellung (50A) zumindest einen Bereich der Öffnung (11A) abdeckt und/oder verschliesst und in der zweiten Stellung (50B) die Öffnung (11A) derart freigibt, dass der Behälter (30) durch die Öffnung (11A) bewegbar ist,
wobei die Abdeckblende (50) mit dem Gehäuse (10) über eine Schwenkeinrichtung (65) verbunden ist, sodass die Abdeckblende (50) um eine Schwenkachse (60) schwenkbar ist und durch Schwenken um diese Schwenkachse (60) zwischen der ersten Stellung (50A) und der zweiten Stellung (50B) bewegbar ist,
wobei die Schwenkeinrichtung (65) einen ersten Hebelarm (71) umfasst, welcher mit der Abdeckblende (50) fest verbunden ist und um die Schwenkachse (60) drehbar gelagert ist,
**dadurch gekennzeichnet, dass**
die Schwenkeinrichtung (65) einen zweiten Hebelarm (72) aufweist, welcher am ersten Hebelarm (71) drehbar gelagert ist, sodass der zweite Hebelarm (72) bezüglich des ersten Hebelarms (71) um eine Drehachse (75) drehbar ist, welche im Wesentlichen parallel zur Schwenkachse (60) und in einem Abstand zur Schwenkachse (60) angeordnet ist, wobei die Schwenkeinrichtung (65) ausserdem eine erste Führungseinrichtung (80) umfasst, welche dazu ausgebildet ist, einen ersten Abschnitt (72A) des zweiten Hebelarms (72) entlang einer ersten Führungskurve (80A) zu führen, wobei sich die erste Führungskurve derart erstreckt, dass der erste Abschnitt (72A) des zweiten Hebelarms (72) bei einer Schwenkbewegung der Abdeckblende (50) zwischen der ersten Stellung (50A) und der zweiten Stellung (50B) entlang der ersten Führungskurve (80A) bewegt wird,
wobei ein Federelement (85) derart angeordnet ist, dass ein erster Abschnitt des Federelements (85) am zweiten Hebelarm (72) in einem Abstand zur Drehachse (75) befestigt ist und ein zweiter Abschnitt des Federelements (85) relativ zum ersten Hebelarm (71) und/oder zum Gehäuse (10) fixiert ist.

2. Getränkebereitungsmaschine (1) gemäss Anspruch 1, wobei das Federelement (85) vorgespannt ist, sodass mittels des Federelements (85) ein auf den zweiten Hebelarm (72) wirkendes Drehmoment bezüglich der Drehachse (75) erzeugbar ist.

3. Getränkebereitungsmaschine (1) gemäss Anspruch 2, wobei, falls sich die Abdeckblende (50) in der ersten Stellung (50A) befindet, der zweite Hebelarm (72) relativ zum ersten Hebelarm (71) derart angeordnet ist, dass das Federelement (85) ein auf den zweiten Hebelarm (72) wirkendes Drehmoment bezüglich der Drehachse (75) erzeugt, welches derart gerichtet ist, dass die Abdeckblende (50) mittels des vom Federelement (85) erzeugten Drehmoments in der ersten Stellung (50A) gehalten ist.

4. Getränkebereitungsmaschine (1) gemäss Anspruch 2 oder3, mit einem ersten mechanischen Anschlag (90) für den ersten Hebelarm (71) und/oder den zweiten Hebelarm (72), wobei der erste mechanische Anschlag (90) derart angeordnet ist, dass der erste Hebelarm (71) und/oder der zweite Hebelarm (72) mit dem ersten mechanischen Anschlag (90) in Kontakt ist bzw. sind, falls die Abdeckblende (50) in die erste Stellung (50A) gebracht ist, wobei der erste Hebelarm (71) und/oder der zweite Hebelarm (72) mittels des vom Federelement (85) erzeugten Drehmoments gegen den ersten mechanischen Anschlag (90) gedrückt ist bzw. sind.

5. Getränkebereitungsmaschine (1) nach Anspruch 4,
mit einem Sensor (95), welcher ausgebildet ist zu detektieren, ob der erste Hebelarm (71) mit dem ersten mechanischen Anschlag (90) in Kontakt gebracht ist, und/oder zu detektieren, ob der zweite Hebelarm (72) mit dem ersten mechanischen Anschlag (90) in Kontakt gebracht ist.

6. Getränkebereitungsmaschine (1) gemäss Anspruch 2, wobei, falls sich die Abdeckblende (50) in der ersten Stellung (50A) oder in einer Zwischenstellung zwischen der ersten Stellung (50A) und der zweiten Stellung (50B) befindet, der zweite Hebelarm (72) relativ zum ersten Hebelarm (71) derart angeordnet ist, dass das Federelement (85) ein auf den zweiten Hebelarm (72) wirkendes Drehmoment bezüglich der Drehachse (75) erzeugt, welches derart gerichtet ist, dass die Abdeckblende (50) mittels des erzeugten Drehmoments in die zweite Stellung (50B) bewegbar ist.

7. Getränkebereitungsmaschine (1) gemäss Anspruch 6, wobei die Abdeckblende (50) mittels des vom Federelement (85) erzeugten Drehmoments in der zweiten Stellung (50B) haltbar ist.

8. Getränkebereitungsmaschine (1) gemäss Anspruch 6 oder 7, mit mindestens einem zweiten mechanischen Anschlag (91) für den ersten Hebelarm (71) und/oder den zweiten Hebelarm (72), wobei der mindestens eine zweite mechanische Anschlag (91) derart angeordnet ist, dass der erste Hebelarm (71) und/oder der zweite Hebelarm (72) mit dem mindestens einen zweiten mechanischen Anschlag (91) in Kontakt ist bzw. sind, falls die Abdeckblende (50) in die zweite Stellung (50B) gebracht ist, wobei der erste Hebelarm (71) und/oder der zweite Hebelarm (72) mittels des vom Federelement (85) erzeugten Drehmoments gegen den mindestens einen zweiten mechanischen Anschlag (91) gedrückt ist bzw. sind.

9. Getränkebereitungsmaschine (1) gemäss einem der Ansprüche 1-8, wobei
die Schwenkeinrichtung (65) eine zweite Führungseinrichtung (81) umfasst, welche dazu ausgebildet ist, einen zweiten Abschnitt (72B) des zweiten Hebelarms (72) entlang einer zweiten Führungskurve (81A) zu führen, wobei sich die zweite Führungskurve (81A) derart erstreckt, dass der zweite Abschnitt (72B) des zweiten Hebelarms (72) bei einer Schwenkbewegung der Abdeckblende (50) zwischen der ersten Stellung (50A) und der zweiten Stellung (50B) entlang der zweiten Führungskurve (81A) bewegt wird.

10. Getränkebereitungsmaschine (1) gemäss einem der Ansprüche 1-9,
mit einem Träger (40) für den Behälter (30), wobei der Träger (40) derart ausgebildet ist, dass der Behälter (30) in einem vorgegebenen Bereich (45B) des Trägers (40) platzierbar ist und der Träger (40), sofern sich die Abdeckblende (50) in der zweiten Stellung befindet, zusammen mit dem im vorgegebenen Bereich (45B) platzierten Behälter (30) durch die Öffnung (11A) in den Innenraum (10A) einführbar ist und der Behälter (30) dabei an eine vorbestimmte Position im Innenraum (10A) bringbar ist, welche derart gewählt ist, dass die Abdeckblende (50) in die erste Stellung bringbar ist.

11. Getränkebereitungsmaschine (1) gemäss Anspruch 10, wobei der Träger (40) zusammen mit dem im vorgegebenen Bereich (45B) platzierten Behälter (30) entlang eines vorgegebenen Weges durch die Öffnung (11A) aus dem Innenraum (10A) herausführbar ist, und
die Abdeckblende (50) derart geformt ist, dass, sofern sich die Abdeckblende (50) in der ersten Stellung (50A) befindet, mindestens ein Bereich des Behälters (30) und/oder mindestens ein Bereich des Trägers (40) in einen mechanischen Kontakt mit der Abdeckblende (50) bringbar ist bzw. sind, wenn der Träger (40) zusammen mit dem im vorgegebenen Bereich (45B) platzierten Behälter (30) entlang des vorgegebenen Weges durch die Öffnung (11A) aus dem Innenraum (10A) herausgeführt wird.

12. Getränkebereitungsmaschine (1) gemäss Anspruch 11, wobei die Abdeckblende (50) derart in einen mechanischen Kontakt mit dem mindestens einen Bereich des Behälters (30) und/oder mit dem mindestens einen Bereich des Trägers (40) bringbar ist, dass die Abdeckblende (50) mit dem Behälter (30) und/oder mit dem Träger (40) mitnehmbar und dabei aus der ersten Lage (50A) heraus um die Schwenkachse (60) schwenkbar ist, wenn der Träger (40) zusammen mit dem im vorgegebenen Bereich (45B) platzierten Behälter (30) entlang des vorgegebenen Weges durch die Öffnung (11A) aus dem Innenraum (10A) herausgeführt wird.

13. Getränkebereitungsmaschine (1) gemäss einem der Ansprüche 10-12, wobei
der Träger (40) einen Restflüssigkeitsbehälter (45A) zur Aufnahme einer Restflüssigkeit umfasst, welche in einem Betrieb der Getränkebereitungsmaschine (1) abgebbar ist.

14. Getränkebereitungsmaschine (1) gemäss einem der Ansprüche 1-13, wobei die Brüheinrichtung (20) zum Herstellen mindestens eines der folgenden Brühgetränke ausgebildet ist: Kaffee und/oder Tee.

## Claims

1. A beverage preparation machine (1) for brewed beverages, which comprises:
a housing (10) with a housing wall (11), which surrounds an inner space (10A) and has at least one opening (11A);
a brewing device (20) arranged in the inner space (10A) for producing a brewed beverage by brewing a quantity of a solid material, accommodated by the brewing device (20), with a brewing fluid, wherein the quantity of the solid material accommodated by the brewing device (20) is enabled to be output from the brewing device (20);
a movable container (30) for receiving a quantity of the solid material output from the brewing device (20), which container (30) is configured to be brought into the inner space (10A) through the opening (11A);
a movable cover plate (50) for covering the opening (11A), wherein the cover plate (50) is configured to be brought at least into a first position (50A) and into a second position (50B) and is formed in such a way that in the first position (50A) it covers and/or closes at least one region of the opening (11A) and in the second position (50B) uncovers the opening (11A) in such a way that the container (30) is enabled to be moved through the opening (11A),
wherein the cover plate (50) is connected to the housing (10) via a pivoting device (65), so that the cover plate (50) is configured to be pivoted about a pivot axis (60) and by pivoting about this pivot axis (60) is movable between the first position (50A) and the second position (50B),
wherein the pivoting device (65) comprises a first lever arm (71), which is securely connected to the cover plate (50) and is mounted rotatably about the pivot axis (60),
**characterized in that**
the pivoting device (65) has a second lever arm (72), which is rotatably mounted on the first lever arm (71), so that the second lever arm (72) is rotatable with respect to the first lever arm (71) about a rotation axis (75), which is arranged substantially parallel to the pivot axis (60) and at a distance from the pivot axis (60), wherein the pivoting device (65) comprises in addition a first guide device (80), which is formed to guide a first portion (72A) of the second lever arm (72) along a first guide curve (80A), wherein the first guide curve extends in such a way that the first portion (72A) of the second lever arm (72) on a pivoting movement of the cover plate (50) between the first position (50A) and the second position (50B) is moved along the first guide curve (80A),
wherein a spring element (85) is arranged in such a way that a first portion of the spring element (85) is fastened to the second lever arm (72) at a distance from the rotation axis (75), and a second portion of the spring element (85) is fixed relative to the first lever arm (71) and/or to the housing (10).

2. The beverage preparation machine (1) according to Claim 1, wherein the spring element (85) is pre-stressed, so that by means of the spring element (85) a torque, acting on the second lever arm (72), is able to be generated with respect to the rotation axis (75).

3. The beverage preparation machine (1) according to Claim 2, wherein, if the cover plate (50) is situated in the first position (50A), the second lever arm (72) is arranged relative to the first lever arm (71) in such a way that the spring element (85) generates a torque, acting on the second lever arm (72), with respect to the rotation axis (75), which torque is directed in such a way that the cover plate (50) is held in the first position (50A) by means of the torque generated by the spring element (85).

4. The beverage preparation machine (1) according to Claim 2 or 3, with a first mechanical stop (90) for the first lever arm (71) and/or for the second lever arm (72), wherein the first mechanical stop (90) is arranged in such a way that the first lever arm (71) and/or the second lever arm (72) is or respectively are in contact with the first mechanical stop (90), if the cover plate (50) is brought into the first position (50A), wherein the first lever arm (71) and/or the second lever arm (72) is or respectively are pressed against the first mechanical stop (90) by means of the torque generated by the spring element (85).

5. The beverage preparation machine (1) according to Claim 4, with a sensor (95), which is formed to detect whether the first lever arm (71) is brought in contact with the first mechanical stop (90), and/or to detect whether the second lever arm (72) is brought in contact with the first mechanical stop (90).

6. The beverage preparation machine (1) according to Claim 2, wherein, if the cover plate (50) is situated in the first position (50A) or in an intermediate position between the first position (50A) and the second position (50B), the second lever arm (72) is arranged relative to the first lever arm (71) in such a way that the spring element (85) generates a torque, acting on the second lever arm (72), with respect to the rotation axis (75), which torque is directed in such a way that the cover plate (50) is movable into the second position (50B) by means of the generated torque.

7. The beverage preparation machine (1) according to Claim 6, wherein the cover plate (50) is configured to be held in the second position (50B) by means of the torque generated by the spring element (85).

8. The beverage preparation machine (1) according to Claim 6 or 7, with at least one second mechanical stop (91) for the first lever arm (71) and/or for the second lever arm (72), wherein the at least one second mechanical stop (91) is arranged in such a way that the first lever arm (71) and/or the second lever arm (72) is or respectively are in contact with the at least one second mechanical stop (91), if the cover plate (50) is brought into the second position (50B), wherein the first lever arm (71) and/or the second lever arm (72) is or respectively are pressed against the at least one second mechanical stop (91) by means of the torque generated by the spring element (85).

9. The beverage preparation machine (1) according to one of Claims 1-8, wherein
the pivoting device (65) comprises a second guide device (81), which is formed to guide a second portion (72B) of the second lever arm (72) along a second guide curve (81A), wherein the second guide curve (81A) extends in such a way that the second portion (72B) of the second lever arm (72) is moved along the second guide curve (81A) on a pivoting movement of the cover plate (50) between the first position (50A) and the second position (50B) .

10. The beverage preparation machine (1) according to one of Claims 1-9,
with a carrier (40) for the container (30), wherein the carrier (40) is formed in such a way that the container (30) is able to be placed in a predefined region (45B) of the carrier (40), and the carrier (40), in so far as the cover plate (50) is situated in the second position, is enabled to be introduced, together with the container (30) placed in the predefined region (45B), through the opening (11A) into the inner space (10A), and the container (30) is enabled to be brought here to a predefined position in the inner space (10A), which is selected in such a way that the cover plate (50) is enabled to be brought into the first position.

11. The beverage preparation machine (1) according to Claim 10, wherein the carrier (40), together with the container (30) placed in the predefined region (45B), is enabled to be guided out of the inner space (10A) along a predefined path through the opening (11A), and
the cover plate (50) is shaped in such a way that, in so far as the cover plate (50) is situated in the first position (50A), at least one region of the container (30) and/or the at least one region of the carrier (40) is or respectively are able to be brought into a mechanical contact with the cover plate (50), when the carrier (40) together with the container (30) placed in the predefined region (45B) is guided out from the inner space (10A) along the predefined path through the opening (11A).

12. The beverage preparation machine (1) according to Claim 11, wherein the cover plate (50) is enabled to be brought into a mechanical contact with the at least one region of the container (30) and/or with the at least one region of the carrier (40) in such a way that the cover plate (50) is enabled to be taken along with the container (30) and/or with the carrier (40) and in so doing is pivotable out from the first position (50A) about the pivot axis (60), when the carrier (40) together with the container (30), placed in the predefined region (45B), is guided out from the inner space (10A) along the predefined path through the opening (11A).

13. The beverage preparation machine (1) according to one of Claims 10-12, wherein
the carrier (40) comprises a residual fluid container (45A) for receiving a residual fluid, which is enabled to be output in an operation of the beverage preparation machine (1).

14. The beverage preparation machine (1) according to one of Claims 1-13, wherein the brewing device (20) is formed for producing at least one of the following brewed beverages: coffee and/or tea.

## Revendications

1. Distributeur de boissons (1) pour boissons infusées, lequel comprend :
un carter (10) doté d'une paroi de carter (11), laquelle entoure un espace intérieur (10A) et comporte au moins une ouverture (11A) ;
un système infuseur (20) disposé dans l'espace intérieur (10A), destiné à préparer une boisson infusée par infusion avec un liquide d'infusion d'une quantité de matière solide réceptionnée par le système infuseur (20), la quantité de la matière solide réceptionnée par le système infuseur (20) étant susceptible d'être distribuée par le système infuseur (20) ;
un récipient (30) mobile, destiné à réceptionner une quantité de la matière solide distribuée hors du système infuseur (20), lequel récipient (30) est susceptible d'être amené dans l'espace intérieur (10A) à travers l'ouverture (11A) ;
un cache (50) mobile, destiné à recouvrir l'ouverture (11A), le cache (50) étant susceptible d'être amené au moins dans une première position (50A) et dans une deuxième position (50B) et étant conçu de sorte à recouvrir et/ou à fermer dans la première position (50A) au moins une zone de l'ouverture (11A) et à libérer l'ouverture (11a) dans la deuxième position (50B), de sorte que le récipient (30) puisse être bougé à travers l'ouverture (11A),
le cache (50) étant assemblé avec le carter (10) par l'intermédiaire d'un système de pivotement (65), de sorte que le cache (50) soit susceptible de pivoter autour d'un axe de pivotement (60) et qu'en pivotant autour dudit axe de pivotement (60), il soit mobile entre la première position (50A) et la deuxième position (50B),
le système de pivotement (65) comprenant un premier bras à levier (71), lequel est fixement assemblé avec le cache (50) et est logé en rotation autour de l'axe de pivotement (60),
**caractérisé en ce que**
le système de pivotement (65) comporte un deuxième bras à levier (72), lequel est logé en rotation sur le premier bras à levier (71), de sorte que le deuxième bras à levier (72) soit rotatif par rapport au premier bras à levier (71) autour d'un axe de rotation (75), lequel est disposé sensiblement à la parallèle de l'axe de pivotement (60) et avec un écart par rapport à l'axe de pivotement (60), le système de pivotement (65) comprenant par ailleurs un premier système de guidage (80), lequel est conçu pour guider un premier segment (72A) du deuxième bras à levier (72) le long d'une première courbe de guidage (80A), la première courbe de guidage s'étendant de telle sorte que lors d'un mouvement pivotant du cache (50), le premier segment (72A) du deuxième bras à levier (72) se déplace entre la première position (50A) et la deuxième position (50B) le long de la première courbe de guidage (80A),
un élément à ressort (85) étant disposé de telle sorte qu'un premier segment de l'élément à ressort (85) soit fixé sur le deuxième bras à levier (72) avec un écart par rapport à l'axe de rotation (75) et qu'un deuxième segment de l'élément à ressort (85) soit fixé par rapport au premier bras à levier (71) et/ou par rapport au carter (10).

2. Distributeur de boissons (1) selon la revendication 1, l'élément à ressort (85) étant précontraint de telle sorte qu'à l'aide de l'élément à ressort (85), un couple de rotation agissant sur le deuxième bras à levier (72) soit susceptible d'être généré par rapport à l'axe de rotation (75).

3. Distributeur de boissons (1) selon la revendication 2, lorsque le cache (50) se trouve dans la première position (50A), le deuxième bras à levier (72) étant disposé par rapport au premier bras à levier (71) de telle sorte que l'élément à ressort (85) génère un couple de rotation agissant sur le deuxième bras à levier (72) par rapport à l'axe de rotation (75), lequel est dirigé de telle sorte que le cache (50) soit maintenu dans la première position (50A) à l'aide du couple de rotation généré par l'élément à ressort (85).

4. Distributeur de boissons (1) selon la revendication 2 ou 3, doté d'une première butée (90) mécanique pour le premier bras à levier (71) et/ou le deuxième bras à levier (72), la première butée (90) mécanique étant placée de telle sorte que le premier bras à levier (71) et/ou le deuxième bras à levier (72) soit ou soient en contact avec la première butée (90) mécanique, lorsque le cache (50) est amené dans la première position (50A), le premier bras à levier (71) et/ou le deuxième bras à levier (72) étant appuyé ou appuyés contre la première butée (90) mécanique à l'aide du couple de rotation généré par l'élément à ressort (85).

5. Distributeur de boissons (1) selon la revendication 4, doté d'un capteur (95), lequel est conçu pour détecter si le premier bras à levier (71) est amené en contact avec la première butée (90) mécanique et/ou pour détecter si le deuxième bras à levier (72) est amené en contact avec la première butée (90) mécanique.

6. Distributeur de boissons (1) selon la revendication 2, lorsque le cache (50) se trouve dans la première position (50A) ou dans une position intermédiaire entre la première position (50A) et la deuxième position (50B), le deuxième bras à levier (72) étant disposé par rapport au premier bras à levier (71) de telle sorte que l'élément à ressort (85) génère un couple de rotation agissant sur le deuxième bras à levier (72) par rapport à l'axe de rotation (75), lequel est dirigé de telle sorte que le cache (50) soit mobile dans la deuxième position (50B) à l'aide du couple de rotation généré.

7. Distributeur de boissons (1) selon la revendication 6, le cache (50) étant susceptible d'être maintenu dans la deuxième position (50B) à l'aide du couple de rotation généré par l'élément à ressort (85).

8. Distributeur de boissons (1) selon la revendication 6 ou 7, doté d'au moins une deuxième butée (91) mécanique pour le premier bras à levier (71) et/ou le deuxième bras à levier (72), l'au moins une deuxième butée (91) mécanique étant placée de telle sorte que le premier bras à levier (71) et/ou le deuxième bras à levier (72) soit ou soient en contact avec au moins une deuxième butée (91) mécanique, lorsque le cache (50) est amené dans la deuxième position (50B), le premier bras à levier (71) et/ou le deuxième bras à levier (72) étant appuyé ou appuyés contre l'au moins une deuxième butée (91) mécanique à l'aide du couple de rotation généré par l'élément à ressort (85).

9. Distributeur de boissons (1) selon l'une quelconque des revendications 1 à 8,
le système de pivotement (65) comprenant un deuxième système de guidage (81), lequel est conçu pour guider un deuxième segment (72B) du deuxième bras à levier (72) le long d'une deuxième courbe de guidage (81A), la deuxième courbe de guidage (81A) s'étendant de telle sorte que lors d'un mouvement pivotant du cache (50), le deuxième segment (72B) du deuxième bras à levier (72) soit déplacé entre la première position (50A) et la deuxième position (50B) le long de la deuxième courbe de guidage (81A).

10. Distributeur de boissons (1) selon l'une quelconque des revendications 1 à 9,
doté d'un support (40) pour le récipient (30), le support (40) étant conçu de telle sorte que le récipient (30) soit susceptible d'être placé dans une zone prédéfinie (45B) du support (40) et qu'à condition que le cache (50) se trouve dans la deuxième position, le support (40) soit susceptible d'être introduit à travers l'ouverture (11A) dans l'espace intérieur (10A), conjointement avec le récipient (30) susceptible d'être placé dans la zone (45B) prédéfinie et qu'à cet effet, le récipient (30) soit susceptible d'être amené dans l'espace intérieur (10A) dans une position prédéfinissable, laquelle est choisie de telle sorte que le cache (50) soit susceptible d'être amené dans la première position.

11. Distributeur de boissons (1) selon la revendication 10, le support (40) étant susceptible d'être extrait à travers l'ouverture (11A) le long d'un trajet prédéfini hors de l'espace intérieur (10A), conjointement avec le récipient (30) placé dans la zone (45B) prédéfinie, et le cache (50) étant conformé de telle sorte qu'à condition que le cache (50) se trouve dans la première position (50A), au moins une zone du récipient (30) et/ou au moins une zone du support (40) soit ou soient susceptible(s) d'être amenée(s) dans un contact mécanique avec le cache (50), lorsque conjointement avec le récipient (30) placé dans la zone (45B) prédéfinie, l'on extrait le support (40) le long du trajet prédéfini, à travers l'ouverture (11A) hors de l'espace intérieur (10A).

12. Distributeur de boissons (1) selon la revendication 11, le cache (50) étant susceptible d'être amené dans un contact mécanique avec l'au moins une zone du récipient (30) et/ou avec l'au moins une zone du support (40), de telle sorte que le cache (50) soit susceptible d'être entraîné avec le récipient (30) et/ou avec le support (40) et soit susceptible de pivoter à cet effet à partir de la première situation (50A) autour de l'axe de pivotement (60), lorsque conjointement avec le récipient (30) placé dans la zone (45B) prédéfinie, l'on extrait le support (40) le long du trajet prédéfini à travers l'ouverture (11A) hors de l'espace intérieur (10A) .

13. Distributeur de boissons (1) selon l'une quelconque des revendications 10 à 12,
le support (40) comprenant un récipient de liquide résiduel (45A), destiné à réceptionner un liquide résiduel, lequel est susceptible d'être distribué lors d'un mode de fonctionnement du distributeur de boissons (1) .

14. Distributeur de boissons (1) selon l'une quelconque des revendications 1 à 13, le système infuseur (20) étant conçu pour préparer au moins l'une des boissons infusées suivantes : du café et/ou du thé.
